# EUROPÄISCHE PATENTSCHRIFT

(11) **EP 1 401 144 B1**
(45) Veröffentlichungstag und Bekanntmachung des Hinweises auf die Patenterteilung: **19.01.2005**
(21) Anmeldenummer: 02020818.7
(22) Anmeldetag: 17.09.2002
(51) Int. Cl.: H04L 9/32

(54) **Verfahren zur Schlüsselzertifizierung und Validierung elektronischer Signaturen**
Method for Key Certification and Signature Validation
Procédé de certification de clé et de validation de signatures

(43) Veröffentlichungstag der Anmeldung: 24.03.2004
(73) Patentinhaber: SIEMENS AKTIENGESELLSCHAFT, 80333 München (DE)
(72) Erfinder: Franke, Markus, 85356 Freising (DE); Furch, Andreas, Dr., 85356 Freising (DE); Heintel, Markus, 81241 München (DE); Pfaff, Oliver, 10827 Berlin (DE)

(56) Entgegenhaltungen:
- EP-A- 1 191 743
- US-A- 5 208 858
- US-A- 5 373 561

## Beschreibung

Elektronische Signaturen werden verwendet, um Sicherheitsziele wie Authentizität, Verbindlichkeit und Integrität zu erreichen. Falls elektronische Daten als Willenserklärung interpretiert werden können, dient ein positives Ergebnis einer Prüfung einer elektronischen Signatur als Beweismittel für deren rechtliche Wirksamkeit. Elektronische Signaturen arbeiten mit zwei Schlüsseln, die gemeinsam erstellt und mathematisch voneinander abhängig sind. Einer dieser Schlüssel - nachfolgend privater Schlüssel - wird geheimgehalten und kann zur Erstellung einer elektronischen Signatur verwendet werden. Der andere Schlüssel - nachfolgend öffentlicher Schlüssel - wird veröffentlicht und kann zur Verifikation einer geleisteten Signatur verwendet werden. Um elektronische Signaturen Personen zuzuordnen, bedarf es einer Bindung des Namens einer Person an den entsprechenden öffentlichen Schlüssel. Diese Bindung erfolgt in der Form eines speziellen elektronischen Dokumentes, welches von einer vertrauenswürdigen dritten Instanz ausgestellt und als Zertifikat bezeichnet wird.

Technisch gesehen sind Zertifikate Datenstrukturen, die Informationen enthalten, mit denen eine Bindung von öffentlichen Schlüsseln an Schlüsselinhaber gewährleistet wird. Die konkrete Bindung eines öffentlichen Schlüssels an einen bestimmten Schlüsselinhaber wird durch eine vertrauenswürdige und neutrale Zertifizierungsstelle (CA - certification authority) vorgenommen, die das zugehörige vollständige Zertifikat mit ihrer elektronischen Signatur beglaubigt. Zertifikate haben nur eine begrenzte Gültigkeitsdauer, die ebenfalls als Bestandteil des Zertifikates von der zertifizierungsstelle mitsigniert ist.

Die Zertifizierungsstelle übernimmt die Prüfung des Namens und bindet durch eine elektronische Signatur (mit ihrem privaten Schlüssel) den Namen der Person an den öffentlichen Schlüssel dieser Person. Das Resultat der Zertifizierung eines öffentlichen Schlüssels ist ein Zertifikat. Als Zertifikatsstruktur wird der Standard X.509 benutzt. Solch ein Zertifikat umfaßt neben dem öffentlichen Schlüssel den Namen der ausstellenden Zertifizierungsstelle, einen Gültigkeitszeitraum, den Namen des Eigentümers und eine eindeutige Nummer der ausstellenden Zertifizierungsstelle. Hierbei wird vorausgesetzt, daß alle beteiligten Personen dem öffentlichen Schlüssel dieser Zertifizierungsstelle vertrauen. Zertifizierungsstellen besitzen getrennte Schlüsselpaare für das Signieren von Zertifikaten, Sperrlisten und Zeitstempeln sowie für die Abwicklung der Kommunikation mit anderen Kommunikationspartnern.

Bekannte Signaturverfahren bestehen aus einem Algorithmus zur Erzeugung elektronischer Signaturen und einem zugeordneten Algorithmus zur Verifikation elektronischer Signaturen. Die elektronischen Daten, für die eine elektronische Signatur gebildet wird, werden üblicherweise als Anhang den elektronisch signierten Daten beigefügt. Jeder Algorithmus zur Erzeugung elektronischer Signaturen erhält als Eingangsparameter zumindest zu signierende Daten sowie einen privaten Schlüssel eines Unterzeichners und liefert als Ergebnis eine elektronische Signatur. Der zugeordnete Algorithmus zur Verifikation elektronischer Signaturen erhält als Eingangsparameter zumindest elektronisch signierte Daten sowie einen öffentlichen Schlüssel eines Unterzeichners und liefert ein positives oder negatives Verifikationsergebnis, je nach dem, ob die Verifikation erfolgreich war.

Eine Erzeugung elektronischer Signaturen erfolgt bisher entsprechend nachstehender Reihenfolge:
- Erzeugung eines asymmetrischen Schlüsselpaars mit einem privaten und einem öffentlichen Schlüssel,
- Ausstellung eines Zertifikats für den öffentlichen Schlüssel,
- Bestimmung eines Hashwertes für die zu signierenden Daten,
- Berechnung der elektronischen Signatur durch Anwendung einer vorgegebenen Signaturfunktion,
- Ausgabe der elektronischen Signatur.

Eine Verifikation elektronischer Signaturen erfolgt bisher entsprechend nachstehender Reihenfolge:
- Bestimmung eines Hashwertes der elektronischen Daten aus dem Anhang zur elektronischen Signatur,
- Anwendung einer vorgegebenen Verifikationsfunktion auf die elektronische Signatur und den Hashwert,
- Ausgabe des Verifikationsergebnisses.

Signaturverfahren unterscheiden sich durch die verwendete Signatur- und Verifikationsfunktion (z.B. RSA, DSA oder ECDSA), einen verwendeten Hashalgorithmus zur Bestimmung des Hashwertes (z.B. SHA-1 oder RIPEMD-160) und ein ggf. verwendetes Paddingverfahren (bei RSA). Ein Paddingverfahren wird angewendet, um einen Hashwert durch eine vorgebbare Zeichenkette zu ergänzen, falls eine Anpassung der Länge des Hashwertes erforderlich ist.

Aus US 5,373,561 ist ein Verfahren zur Erzeugung, Zertifizierung und Validierung elektronischer Signaturen bekannt, bei dem ein asymmetrisches Schlüsselpaar implizit erzeugt wird, das einen privaten und einen öffentlichen Schlüssel umfaßt. Des weiteren wird eine elektronische Signatur für ein elektronisches Dokument berechnet und nach Berechnung der Signatur eine Zertifizierung der Signatur und des Dokuments vorgenommen.

Bisher bekannten Signaturverfahren ist ein hoher Aufwand zur dauerhaften Sicherung des privaten Signaturschlüssels auf Seiten der Person, welcher der private Signaturschlüssel zugeordnet ist, gegen unberechtigten Zugriff gemeinsam. Der vorliegenden Erfindung liegt die Aufgabe zugrunde ein Verfahren zur Erzeugung von elektronischen Signaturen zu schaffen, das keine dauerhafte Sicherung eines privaten Signaturschlüssels auf Seiten einer Person, welcher der private Signaturschlüssel zugeordnet ist, gegen unberechtigten Zugriff erfordert.

Diese Aufgabe wird erfindungsgemäß durch ein Verfahren mit den in Anspruch 1 angegebenen Merkmalen gelöst. Vorteilhafte Weiterbildungen des erfindungsgemäßen Verfahrens sind in den abhängigen Ansprüchen angegeben.

Ein wesentlicher Aspekt der vorliegenden Erfindung besteht darin, daß eine Zertifizierung eines öffentlichen Validierungsschlüssels erst nach einer Berechnung einer elektronischen Signatur erfolgt. Eine willentliche, durch ein signiertes Dokument ausgedrückte Handlung seitens eines Verfasser eines elektronischen Dokuments erfolgt somit erst nach Signaturgenerierung im Rahmen eines Zertifikatsbeantragungsprozesses. Da nicht eine Veranlassung einer Berechnung einer elektronischen Signatur, sondern eine Zertifikatsbeantragung die willentliche Handlung darstellt, ist es nicht erforderlich, einen zum öffentlichen Validierungsschlüssel korrespondierenden privaten Signaturschlüssel nach Berechnung der elektronischen Signatur aufzubewahren. Daher kann der private Signaturschlüssel nach Berechnung der elektronischen Signatur vernichtet werden und muß daher nicht mehr gegen unberechtigten Zugriff gesichert werden.

Die vorliegende Erfindung wird nachfolgend an einem Ausführungsbeispiel anhand der Zeichnung näher erläutert. Es zeigt
- Figur 1: eine Darstellung eines Ablaufs eines herkömmlichen Signaturverfahrens,
- Figur 2: eine Darstellung eines Ablaufs eines erfindungsgemäßen Signaturverfahrens.

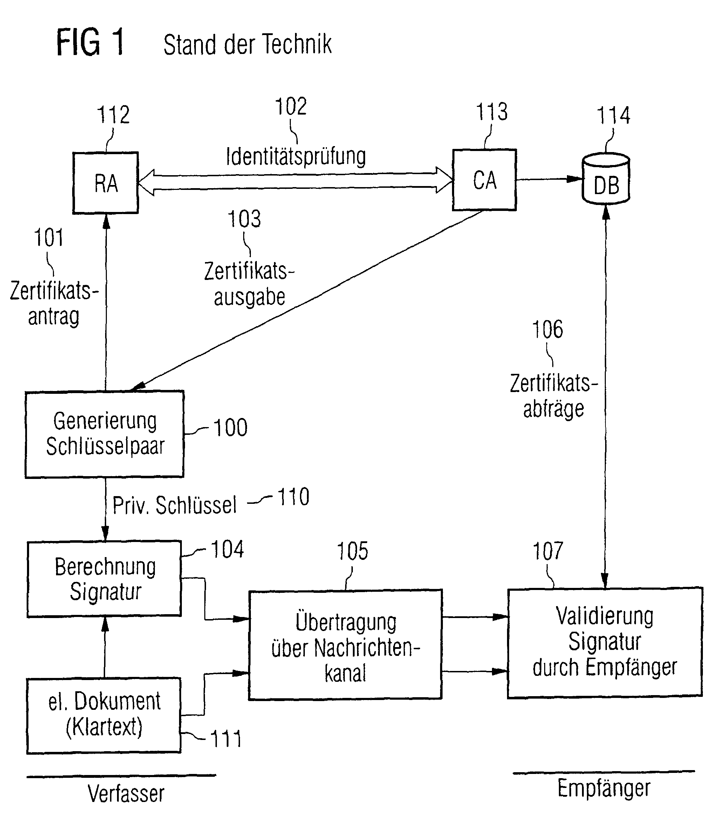

In Figur 1 ist ein Ablauf eines herkömmlichen Signaturverfahrens dargestellt, bei dem zunächst ein Schlüsselpaar generiert wird, das einen privaten Signaturschlüssel 110 und einen öffentlichen Validierungsschlüssel umfaßt (Schritt 100). Nachfolgend wird ein Zertifikatsantrag bei einer Registrierungsstelle 112 (RA - registration authority) gestellt (Schritt 101). Im Zusammenspiel zwischen der Registrierungsstelle 112 und einer Zertifizierungsstelle 113 (CA - certification authority) wird eine Identitätsprüfung in Bezug auf einen jeweiligen Antragssteller vorgenommen (Schritt 102).

Bei einem positiven Überprüfungsergebnis vergibt die Zertifizierungsstelle 113 ein Zertifikat für den öffentlichen Validierungsschlüssel an einen jeweiligen Antragssteller (Schritt 103) und speichert einen entsprechenden Eintrag für das ausgegebene zertifikat in einer der Zertifizierungsstelle 113 zugeordneten Datenbasis 114 ab, die zur Zertifikatsabfrage öffentlich zugänglich ist. Außerdem sind in der Datenbasis 114 Zertifikatssperrlisten gespeichert, die über ungültige Zertifikate informieren. Nach Zertifizierung des öffentlichen Validierungsschlüssels wird für ein zu signierendes elektronisches Dokument 111 eine elektronische Signatur unter Verwendung des privaten Signaturschlüssels 110 und einer vorgebbaren Signaturfunktion berechnet (Schritt 104). Anschließend werden die berechnete Signatur und das elektronische Dokument 111 über einen Nachrichtenkanal vom Verfasser des elektronischen Dokuments 111 als Nachricht an einen Empfänger des elektronischen Dokuments 111 übertragen (Schritt 105).

Empfängerseitig wird zur Validierung der elektronischen Signatur eine zertifikatsabfrage noch vorgenommen (Schritt 106). Dabei wird entweder ein dem Verfasser zugeordneter öffentlicher Validierungsschlüssel aus der Datenbasis 114 abgefragt, oder es wird ein dem in der übertragenden Nachricht enthaltenen öffentlichen Validierungsschlüssel zugeordneter Eintrag in der Datenbasis 114 abgefragt, der ggf. die Gültigkeit des zugeordneten Zertifikats bestätigt. Abschließend wird eine Validierung der in der übertragenen Nachricht enthaltenen Signatur durch den Empfänger vorgenommen (Schritt 107). Bei der Validierung der elektronischen Signatur durch den Empfänger wird einerseits die Signatur mit Hilfe des öffentlichen Validierungsschlüssels entschlüsselt und andererseits ein Hash-Wert für das elektronische Dokument 111 berechnet. Abrechnet. Abschließend werden die entschlüsselte Signatur und der berechnete Hash-Wert auf Übereinstimmung verglichen. Bei Übereinstimmung der entschlüsselten Signatur und des berechneten Hash-Wertes wird die Signatur empfängerseitig als gültig anerkannt.

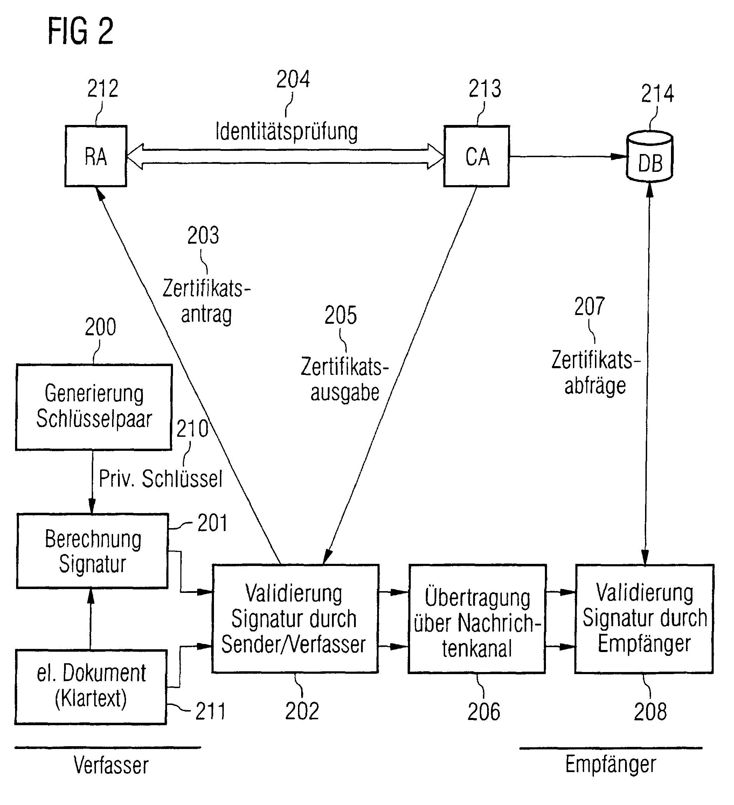

In Figur 2 ist ein Ablauf eines erfindungsgemäßen Signaturverfahrens dargestellt, bei dem zunächst ein asymmetrisches Schlüsselpaar erzeugt wird (Schritt 200). Mittels eines vom generierten Schlüsselpaar umfaßten privaten Signaturschlüssels 210 und einer vorgebbaren Signaturfunktion wird aus einem elektronischen Dokument 211 verfasserseitig eine elektronische Signatur berechnet (Schritt 201). Nach Berechnung der elektronischen Signatur wird diese durch den Verfasser validiert, um sicherzustellen, daß die berechnete elektronische Signatur einer durch das elektronische Dokument 111 ausgedrückten Willenshandlung entspricht (Schritt 202).

Bei einem positiven Validierungsergebnis wird ein Zertifikat für einen zum privaten Signaturschlüssel 210 korrespondierenden öffentlichen Validierungsschlüssel bei einer Registrierungsstelle 212 beantragt (Schritt 203). Nachfolgend werden im Zertifikatsantrag enthaltene Angaben überprüft, insbesondere die Identität des Verfassers bzw. eines Antragsstellers (Schritt 204).

Bei einem positiven Überprüfungsergebnis wird von einer Zertifizierungsstelle 213 ein Zertifikat für den öffentlichen Validierungsschlüssel an den Antragssteller bzw. Verfasser des elektronischen Dokuments 211 ausgegeben (Schritt 205). Außerdem wird ein entsprechender Eintrag in einer der Zertifizierungsstelle 213 zugeordneten Datenbasis 214 für das ausgegebene Zertifikat vorgenommen.

Nach Validierung der berechneten Signatur durch den Verfasser des elektronischen Dokuments 211 und nach Zertifizierung des öffentlichen Validierungsschlüssels werden das elektronische Dokument 211 und die berechnete elektronische Signatur als Nachricht zu einem Empfänger des elektronischen Dokuments 211 über einen Nachrichtenkanal übertragen (Schritt 206). Empfängerseitig wird in bekannter Weise eine Zertifikatsabfrage vorgenommen (Schritt 207) und eine Validierung der in der empfangenen Nachricht enthaltenen Signatur durchgeführt (Schritt 208).

Bei der Validierung einer elektronischen Signatur werden nur solche Signaturen als gültig anerkannt, die zu einem Zeitpunkt vor der Zertifizierung des öffentlichen Validierungsschlüssels erzeugt wurden. Hierdurch entfällt die bei bisherigen Signaturverfahren bekannte Revokationsproblematik in bezug auf öffentliche Validierungsschlüssel. Außerdem kann auf diese Weise nach dem Zeitpunkt der Zertifizierung des öffentlichen Validierungsschlüssels kein Mißbrauch mehr mit dem privaten Signaturschlüssel betrieben werden, so daß keine Mechanismen zur dauerhaften Vermeidung unberechtigter Zugriffe auf den privaten Signaturschlüssel 210 erforderlich sind.

Bei der Zertifizierung des öffentlichen Validierungsschlüssels entsprechend den Schritten 203 bis 205 kann zusätzlich zu einem Benutzeridentifikator und dem öffentlichen Validierungsschlüssel eine Referenz auf das jeweils signierte elektronische Dokument 211 einbezogen werden. Bei der empfängerseitigen Validierung der Signatur gemäß Schritt 208 wird dann die Referenz zum elektronischen Dokument 211 zusätzlich ausgewertet. Darüber hinaus ist es möglich, nicht nur eine Referenz auf ein einziges elektronisches Dokument in die Zertifizierung des öffentlichen Validierungsschlüssels einzubeziehen, sondern eine Mehrzahl von Referenzen auf innerhalb eines bestimmten Bezugszeitraumes signierte elektronische Dokumente. Eine Referenz auf ein elektronisches Dokument wird beispielsweise durch eine Berechnung eines Hash-Wertes für das jeweilige elektronische Dokument implementiert. Bei einer empfängerseitigen Validierung der Signatur entsprechend Schritt 208 werden dann die entsprechenden Hash-Werte miteinander verglichen.

Eine Anwendung des erfindungsgemäßen Signaturverfahrens ist beispielsweise innerhalb eines zentralen Hardware-Sicherheitsmoduls möglich. Hierbei steht sämtlichen Mitgliedern einer geschlossenen Benutzergruppe ein privater Signaturschlüssel im zentralen Hardware-Sicherheitsmodul gemeinsam zur Verfügung. Benutzerseitig werden Hash-Werte für zu signierende elektronische Dokumente erzeugt und über einen geschützten Übertragungskanal an das Hardware-Sicherheitsmodul übermittelt. Das Hardware-Sicherheitsmodul berechnet ohne weitere Überprüfung die elektronische Signatur und sendet diese zurück einen jeweiligen Benutzer. Der jeweilige Benutzer speichert das signierte elektronische Dokument mit zugehörigem Hash-Wert und elektronischer Signatur nach erfolgreicher Validierung der Signatur durch den jeweiligen Benutzer ab. Die zugehörigen Hash-Werte werden zu einem späteren Zeitpunkt dem Zertifikatsantrag für den öffentlichen Validierungsschlüssel beigefügt und durch die Zertifizierungsstelle im Zertifikat für den öffentlichen Validierungsschlüssel als zusätzliches Attribut inkludiert. Das Zertifikat ist damit in eindeutiger Weise mit dem signierten elektronischen Dokument verknüpft.

Anstelle einer Nutzung eines zentralen Hardware-Sicherheitsmoduls ist auch eine Nutzung eines persönlichen Sicherheitsmoduls zur Signaturerzeugung möglich. Dabei wird der Hash-Wert für das zu signierende elektronische Dokument beispielsweise an einem Personal Computer o.ä. erzeugt und über eine Infrarot- oder Bluetooth-Schnittstelle an das persönliche Sicherheitsmodul übermittelt.

Eine weitere Anwendung des erfindungsgemäßen Signaturverfahrens besteht in einer Nutzung eines modifizierten und mit einer Validierungslogik versehenen Druckers. Als Eingangsparameter erhält ein solcher Validierungsdrucker ein zu signierendes elektronisches Dokument und eine für dieses elektronische Dokument berechnete elektronische Signatur. Bei erfolgreicher Validierung der elektronischen Signatur wird das zugehörige elektronische Dokument auf dem Validierungsdrucker ausgegeben. Anschließend wird dem Verfasser des elektronischen Dokuments die Möglichkeit geboten anhand des Ausdrucks zu entscheiden, ob er den zuvor verwendeten privaten Signaturschlüssel zertifizieren lassen will.

Die Anwendung der vorliegenden Erfindung ist nicht auf die hier beschriebenen Ausführungsbeispiele beschränkt.

## Patentansprüche

1. Verfahren zur Erzeugung und/oder Validierung elektronischer Signaturen, bei dem
- ein asymmetrisches Schlüsselpaar erzeugt wird, das einen privaten Signaturschlüssel (210) und einen öffentlichen Validierungsschlüssel umfaßt,
- zumindest eine elektronische Signatur mittels des privaten Signaturschlüssels (210) und durch Anwendung einer vorgebbaren Signaturfunktion für zumindest ein elektronisches Dokument (211) berechnet wird,
**dadurch gekennzeichnet, daß** nach Berechnung der zumindest einen elektronischen Signatur eine zertifizierung des öffentlichen Validierungsschlüssels erfolgt.

2. Verfahren nach Anspruch 1,
**dadurch gekennzeichnet, daß** bei einer Validierung nur Signaturen als gültig erkannt werden, die zu einem Zeitpunkt vor der Zertifizierung des öffentlichen Validierungsschlüssels erzeugt werden und/oder wurden.

3. Verfahren nach einem der Ansprüche 1 oder 2,
**dadurch gekennzeichnet, daß** bei der Zertifizierung des öffentlichen Validierungsschlüssels zusätzlich zu einem Benutzeridentifikator und dem öffentlichem Validierungsschlüssel zumindest eine Referenz auf das zumindest eine elektronische Dokument (211) einbezogen wird.

4. Verfahren nach Anspruch 3,
**dadurch gekennzeichnet, daß** eine Implementierung der zumindest einen Referenz durch eine Berechnung eines Hash-Wertes für das zumindest eine elektronische Dokument (211) erfolgt.

5. Verfahren nach einem der Ansprüche 1 bis 4,
**dadurch gekennzeichnet, daß** nach Berechnung der Signatur und vor deren Übermittlung an einen Empfänger eine Validierung durch einen Verfasser des zumindest einen elektronischen Dokuments (211) zur Überprüfung einer durch das zumindest eine elektronische Dokument (211) ausgedrückten Willenshandlung erfolgt.

## Claims

1. Method for generating and/or validating electronic signatures, with which
- an asymmetric key pair is generated, which comprises a private signature key (210) and a public validation key,
- at least one electronic signature is computed using the private signature key (210) and a predefinable signature function for at least one electronic document (211),
**characterised in that** the public validation key is certified after computation of the at least one electronic signature.

2. Method according to Claim 1,
**characterised in that** during validation only signatures which are and/or were generated before certification of the public validation key are acknowledged as valid.

3. Method according to one of Claims 1 or 2,
**characterised in that** during certification of the public validation key at least one reference to the at least one electronic document (211) is included in addition to a user identifier and the public validation key.

4. Method according to Claim 3,
**characterised in that** the at least one reference is implemented by computing a hash value for the at least one electronic document (211).

5. Method according to one of Claims 1 to 4,
**characterised in that** after computation of the signature and before its transmission to a recipient, validation is carried out by the author of the at least one electronic document (211) to verify a deliberate action expressed in the form of the at least one electronic document (211).

## Revendications

1. Procédé de création et/ou de validation de signatures électroniques, au cours duquel
- une paire de clés asymétriques, comportant une clé de signature privée (210) et une clé de validation officielle est créée,
- au moins une signature électronique est calculée à l'aide de la clé de signature privée (210) et par utilisation d'une fonction de signature prédéfinissable pour l'au moins un document électronique (211),
**caractérisé en ce qu'**à l'issue du calcul de l'au moins une signature électronique, on procède à une certification de la clé de validation officielle.

2. Procédé selon la revendication 1,
**caractérisé en ce que** lors d'une validation, seules des signatures qui sont et/ou ont été créées à un moment avant la certification de la clé de validation officielle sont reconnues comme étant valables.

3. Procédé selon l'une des revendications 1 ou 2,
**caractérisé en ce que** lors de la certification de la clé de validation officielle, au moins une référence à l'au moins un document électronique (211) est impliquée en supplément d'un identificateur d'utilisateur et de la clé de validation officielle.

4. Procédé selon la revendication 3,
**caractérisé en ce qu'**on procède à une implémentation de l'au moins une référence, par un calcul d'une valeur hash pour l'au moins un document électronique (211).

5. Procédé selon l'une des revendications 1 à 4,
**caractérisé en ce qu'**après le calcul de la signature et avant sa transmission à un destinataire, on procède à une validation par un auteur de l'au moins un document électronique (211) pour le contrôle d'un acte volontaire exprimé par l'au moins un document électronique (211).
